# EUROPEAN PATENT SPECIFICATION

(11) **EP 3 216 758 B1**
(45) Date of publication and mention of the grant of the patent: **13.10.2021**
(21) Application number: 15856245.4
(22) Date of filing: 31.08.2015
(51) Int. Cl.: C01B 32/25, B01J 3/08, B02C 17/00, B82Y 30/00, B82Y 40/00, H01B 1/04, B01J 13/00

(54) **SUSPENSION OF NANODIAMOND AGGREGATES AND SINGLE-NANO-SIZED NANODIAMOND DISPERSION**
SUSPENSION VON NANODIAMANT-AGGREGATEN UND DISPERSION VON DIAMANTEN IN NANOGRÖßE
SUSPENSION D'AGRÉGATS DE NANODIAMANTS ET DISPERSION DE DIAMANTS NANOMÉTRIQUES

(30) Priority: 07.11.2014 JP 2014226655; 19.06.2015 JP 2015123758
(43) Date of publication of application: 13.09.2017
(73) Proprietor: Daicel Corporation, Osaka-shi, Osaka 530-0011 (JP)
(72) Inventor: KIMOTO, Norihiro, Himeji-shi Hyogo 671-1283 (JP); KOJIMA, Ryouta, Himeji-shi Hyogo 671-1283 (JP)
(74) Representative: Grünecker Patent- und Rechtsanwälte PartG mbB
(86) International application number: PCT/JP2015/074653
(87) International publication number: WO 2016/072137

(56) References cited:
- EP-A2- 2 535 312
- WO-A1-2009/060613
- JP-A- 2001 329 252
- JP-A- 2005 001 983
- JP-A- 2008 115 303
- M. YU. KOROLEVA ET AL: "Sedimentation stability of aqueous dispersions of nanodiamond agglomerates", THEORETICAL FOUNDATIONS OF CHEMICAL ENGINEERING, vol. 43, no. 4, 1 August 2009 (2009-08-01) , pages 478-481, XP055474454, RU ISSN: 0040-5795, DOI: 10.1134/S0040579509040216
- Gavin Farmer: "Realising Diamond Superior Potential Within Thermal Management", Kokkola Material Week 2013, 13 November 2013 (2013-11-13), pages 1-34, XP055474149, Retrieved from the Internet: URL:https://materialweek.fi/file/Kokkola-M aterial-Week-2013-NanoKokkola-Gavin-Farmer -Carbodeon-Company-Presentation.pdf [retrieved on 2018-05-09] & Carbodeon: "uDiamond Vox D (2nd Gen) - Nanodiamonds - additives for thermal management and wear resistant nanocomposites, coatings and plating", , 1 January 2014 (2014-01-01), XP055474438, Retrieved from the Internet: URL:http://www.carbodeon.net/index.php/en/ nanomaterials/udiamond-liquid-dispersions/ udiamond-vox-d-2nd-gen?tmpl=component&prin t=1&page= [retrieved on 2018-05-11]
- A. E. ALEKSENSKIY ET AL: "Deagglomeration of Detonation Nanodiamonds", NANOSCIENCE AND NANOTECHNOLOGY LETTERS, vol. 3, no. 1, 1 February 2011 (2011-02-01), pages 68-74, XP055474139, US ISSN: 1941-4900, DOI: 10.1166/nnl.2011.1122
- GIBSON N ET AL: "Colloidal stability of modified nanodiamond particles", DIAMOND AND RELATED MATERIALS, ELSEVIER SCIENCE PUBLISHERS, AMSTERDAM, NL, vol. 18, no. 4, 1 April 2009 (2009-04-01), pages 620-626, XP025951497, ISSN: 0925-9635, DOI: 10.1016/J.DIAMOND.2008.10.049 [retrieved on 2008-11-05]
- ALEKSENSKII,A.E. ET AL.: 'Effect of Hydrogen on the Structure of Ultradisperse Diamond' PHYSICS OF THE SOLID STATE vol. 42, no. 8, 2000, pages 1575 - 1578, XP019310048
- None

## Description

### Technical Field

The present invention relates to a suspension of purified detonation nanodiamond aggregates, and a single-nano-sized nanodiamond dispersion (dispersion of single-digit-nano-sized nanodiamonds). This application claims priority to Japanese Patent Application No. 2014-226655, filed November 7, 2014 to Japan, and Japanese Patent Application No. 2015-123758, filed June 19, 2015 to Japan.

### Background Art

Nanodiamond particles have characteristic properties such as high mechanical strengths, thermal conductivity, optical transparency, a low refractive index, excellent electrical insulation, a low dielectric constant, and a low friction coefficient, and are used typically as lubricants, surface modifiers, abrasives, and insulating materials for semiconductors (semiconductor devices) and circuit boards. In addition, applications of nanodiamonds to glass alternatives and to the electrical and electronic field, the energy field, and the biomedical field have been studied increasingly.

Nanodiamond particles are produced by a static high-pressure process or a detonation technique. The nanodiamond particles, when produced by the detonation technique, are produced in the following manner. An explosive is detonated in a closed system to give detonation soot, the soot is purified by a chemical treatment, dispersed in water, and, in this state, pulverized using a disperser such as a bead mill or an ultrasonic homogenizer to give an aqueous dispersion, from which water is removed, and yields the nanodiamond as particles. The removal of water is performed using a technique such as ultracentrifugation, thickening-drying, freeze-drying, or a technique using a spray dryer.

Patent Literature (PTL) 1 describes that an agglutinate of nanodiamond powders prepared by a shock wave synthesis technique (detonation technique) was dispersed in pure water, the agglutinate structure was broken up using a bead mill, and yielded a colloid of primary particles having a diameter of 5 to 6 nm, where the colloid has a zeta potential of -39.2 mV (at 25°C) (Example 1). However, the colloid (slurry) of primary particles, when left stand at room temperature for a long time, undergoes gradually proceeding aggregation, and the particles grow up to an average particle diameter of 105 nm after several weeks (Example 1).

PTL 2 describes as follows. A 10% aqueous slurry of detonation nanodiamond agglutinates, when deagglutinated using a bead mill, gave a pitch black, transparent colloidal solution. The colloidal solution, when left stand for several hours, was converted into a soft gel. The gel was combined with water to a concentration of down to 2%, filtrated through a 400-micron PTFE filter, and gave a stable colloid mother liquor for storage. This colloidal solution included a group of particles with a broad distribution width, in which single-nano-sized super-ultrafine particles having a diameter of 4.6 ±0.7 nm represent a large percentage of the group of particles, with the remainder being double-digit-nano-sized particles (Example 1). This fine nanodiamond dispersion, however, has a low concentration.

PTL 3 describes as follows. Diamond particles synthesized by an explosion technique (detonation technique) were subjected to purification as a pretreatment to give diamond particles having an average particle diameter D50 of 89 nm, from which a slurry having a concentration of 10 weight percent and a pH of 10 (adjusted with ammonia water) was prepared. The slurry was subjected to a dispersing treatment using a ball mill, was adjusted in concentration, and yielded a dispersion of fine diamond particles, where the dispersion has a concentration of 2.0 weight percent and a pH of 8. This was subjected to classification, further combined with (diluted with) pure water, and yielded a 1.0 weight percent dispersion of fine diamonds. This had an average particle diameter D50 of 21.2 nm and a zeta potential of -40.5 mV (at 25°C) (Example 1). This dispersion of fine diamonds, however, has a large nanodiamond particle diameter and has a low concentration.

PTL 4 relates to a nano-diamond dispersion solution and a method of preparing the same. The method of preparing a nano-diamond dispersion solution comprises the following steps: providing a nano-diamond aggregation; mixing the nano-diamond aggregation with a metal hydroxide solution and stirring the mixture such that the nano-diamond aggregation is separated, to obtain a mixture solution; stabilizing the mixture solution such that the mixture solution is separated into a supernatant and precipitates; and extracting the supernatant and precipitates.

Non-Patent Literature (NPTL) 1 studies the conductivity and sedimentation stability of aqueous dispersions of nanodiamond agglomerates. The properties and stability of dispersions are shown to be significantly affected by the pretreatment of particles. The particle size distribution was determined by means of optical microscopy. The sedimentation kinetics of nanodiamond particles in aqueous solutions was studied. The sedimentation kinetic curves show two sections of fast and slow sedimentation.

### Non-Patent Literature (NPTL) 2

Non-Patent Literature (NPTL) 3 discloses a method for production of stable mono-disperse hydrosol of 4 nm isolated DND particles. The method includes deep purification of commercial DND from metal impurities and appropriate control of its residual amount by electronic spin resonance, annealing of purified DND in air and centrifugation. The main result of the study demonstrates that centrifuging of a DND hydrosol of particles with a high negative zeta potential produced by deep purification and air annealing results into breakup of the agglomerates. A model explained high strength of the DND agglomerates has been discussed.

Non-Patent Literature (NPTL) 4 provides an analysis of the colloidal stability of detonation nanodiamonds hydrosols, which have undergone different surface modifications, based on zeta potential measurements and titration experiments. It was shown that commercial DNDs can be modified to form stable colloidal suspensions without aggregating and sedimenting for prolonged periods of time. It was demonstrated that commercial DNDs of low colloidal stability can be further treated to result in stable hydrosols, in which the origin of the positive zeta potential has been attributed to the presence of pyrone-like structures. It was also demonstrated that DND treatment in atmospheric pressure plasma can result in a 20% decrease of the average aggregate size. Finally, for DND applications as enterosorbents, the titration studies prove that the modified DNDs (both with negative and positive zeta potentials in DI water) preserve colloidal stability over the physiologically important pH range (2-8 pH).

### Citation List

### Patent Literature

PTL 1: Japanese Unexamined Patent Application Publication (JP-A) No. 2005-001983
PTL 2: JP-A No. 2009-209027
PTL 3: JP-A No. 2010-126669
PTL 4: EP 2 535 312 A2

### Non-Patent Literature

NPTL1: M. Y. Koroleva et al, THEORETICAL FOUNDATIONS OF CHEMICAL ENGINEERING 2009, 43, 478-481
NPTL2: G. Farmer, "Realising Diamond Superior Potential Within Thermal Management", Kokkola Material week 2013, 1-34
NPTL3: A. E. Aleksenskiy et al, NANOSCIENCE AND NANOTECHNOLOGY LETTERS 2011, 3, 68-74
NPTL4: N. Gibson et al, DIAMOND AND RELATED MATERIALS 2009, 18, 620-626

### Summary of Invention

### Technical Problem

Accordingly, the present invention has an object to provide a single-nano-sized nanodiamond dispersion, and a method for producing the dispersion, where the dispersion has excellent dispersion stability (is highly stable as a dispersion) even when having a high concentration.

The present invention has another object to provide a suspension of purified nanodiamond aggregates, where the suspension is useful for yielding a single-nano-sized nanodiamond dispersion which has excellent properties as above.

### Solution to Problem

The inventors of the present invention made investigations in detail on a process of removing inhibitory factors from detonation soot, where the inhibitory factors adversely affect single-nano-size dispersing and are exemplified by metal impurities and graphite carbon, and where the detonation soot includes artificial diamond synthesized by a detonation technique. As a result, the inventors found that electrolytes, such as sodium chloride, adversely affect the single-nano-size dispersing of nanodiamonds, and, on the basis of this, found a cleaning method using an electric conductivity as an index. More specifically, the inventors found that a suspension of detonation nanodiamond aggregates, when subjected to a dispersive pretreatment (cleaning treatment) to be adjusted to a specific pH and a specific electric conductivity, and subjected sequentially to a dispersing treatment (deaggregation treatment), can be converted into a single-nano-sized nanodiamond dispersion, which dispersion resists aggregation and has excellent dispersion stability even during a long-time storage even at a high concentration typically of 4 weight percent or more. The present invention has been made on the basis of these findings and further investigations.

Specifically, the present invention provides a suspension of nanodiamond aggregates, where the suspension is a suspension of detonation nanodiamond aggregates. The suspension has a pH of 8 to 10.5 and an electric conductivity of 300 µS/cm or less per weight percent of the solids concentration of the suspension.

The suspension of nanodiamond aggregates preferably has a solids concentration of 4 weight percent or more.

The detonation nanodiamond aggregates are preferably aggregates of air-cooled detonation nanodiamonds.

The present invention also provides a single-nano-sized nanodiamond dispersion obtained by subjecting the suspension of nanodiamond aggregates to deaggregation (crushing). This dispersion is hereinafter also referred to as a "single-nano-sized dispersion I".

The single-nano-sized dispersion I preferably has a solids concentration of 4 weight percent or more.

The present invention also provides a method for producing a single-nano-sized nanodiamond dispersion. The method includes the step of subjecting the suspension of nanodiamond aggregates to a deaggregation treatment.

In the method for producing a single-nano-sized nanodiamond dispersion, the suspension of nanodiamond aggregates is preferably subjected to a deaggregation treatment while the suspension is adjusted to have a pH of 8 or more.

The deaggregation treatment of the suspension of nanodiamond aggregates is preferably performed using a bead mill or ultrasound.

The present invention also provides a single-nano-sized nanodiamond dispersion, where the dispersion has a solids concentration of 5.2 weight percent or more and an electric conductivity of 300 µS/cm or less per weight percent of the solids concentration. This dispersion is hereinafter also referred to as a "single-nano-sized dispersion II".

The single-nano-sized dispersion II preferably has a solids concentration of 5.5 weight percent or more.

The single-nano-sized dispersion II preferably has a pH of 8 or more.

In the single-nano-sized dispersion II, particles of the nanodiamond preferably have a zeta potential (at 25°C) of -42 mV or less.

The single-nano-sized dispersion II is preferably derived from diamonds synthesized by an air-cooling detonation technique.

The suspension of nanodiamond aggregates according to the present invention, when subjected to a deaggregation treatment, can readily give a single-nano-sized nanodiamond dispersion which has excellent dispersion stability even when having a high concentration.

The single-nano-sized nanodiamond dispersion according to the present invention resists aggregation even when having a high concentration and has excellent dispersion stability.

The method according to the present invention for producing a single-nano-sized nanodiamond dispersion can readily produce a single-nano-sized nanodiamond dispersion by a simple operation, where the dispersion resists aggregation even when having a high concentration and has excellent dispersion stability.

### Description of Embodiments

### Suspension of Nanodiamond Aggregates

The suspension of nanodiamond aggregates according to the present invention is a suspension of detonation nanodiamond aggregates. The suspension has a pH of 8 to 10.5 and an electric conductivity of 300 µS/cm or less per weight percent of solids concentration.

A suspension of nanodiamond aggregates, which meets the condition of having a pH of 8 to 10.5 and an electric conductivity of 300 µS/cm or less per weight percent of solids concentration, is hereinafter also referred to as a "suspension B of nanodiamond aggregates".

Nanodiamond particles may be produced from an element mineral of carbon (such as graphite) as a raw material by a process or technique such as a detonation technique, a flux growth, a static high-pressure process, and a high-temperature and high-pressure process. The nanodiamonds for use in the present invention are nanodiamonds formed by a detonation technique (in particular, a detonation using an oxygen-deficient explosive). This is because the technique can give nanodiamond particles having a very small average particle diameter of primary particles.

The detonation technique is a technique of detonating an explosive and thereby applying a dynamic impact to an element mineral of carbon, to convert the carbon element mineral directly into particles having a diamond structure. Examples of the explosive for use herein include, but are not limited to, cyclotrimethylenetrinitroamine (RDX), cyclotetramethylenetetranitramine (HMX), trinitrotoluene (TNT), trinitrophenylmethylnitroamine, pentaerythritol tetranitrate, tetranitromethane, and mixtures of them (such as TNT/HMX and TNT/RDX mixtures).

Such detonation techniques are classified by the heat removing process into a water-cooling detonation technique and an air-cooling detonation technique. Preparation of a single-nano-sized nanodiamond dispersion from detonation soot synthesized by the air-cooling detonation technique has never done by conventional technologies. The present invention is therefore particularly useful when detonation soot synthesized by the air-cooling detonation technique is used as the raw material. The air-cooled detonation nanodiamonds and the water-cooled detonation nanodiamonds differ from each other typically in type and amount of surface functional groups, and in average primary particle diameter. As compared with the water-cooled detonation nanodiamonds, the air-cooled detonation nanodiamonds contain or bear larger amounts of acidic functional groups to have higher hydrophilicity, and thereby offer better wettability with water. In addition, the air-cooled detonation nanodiamonds have a smaller average primary particle diameter of 4 to 5 nm, as compared with that (5 to 6 nm) of the water-cooled detonation nanodiamonds.

Resulting nanodiamond particles (nanodiamond soot) obtained by the above method tend to be contaminated with oxides of metals such as Fe, Co, and Ni, which are contained in the production equipment. Non-limiting examples of the metal oxides include Fe₂O₃, Fe₃O₄, CO₂O₃, CO₃O₄, NiO, and Ni₂O₃. Accordingly, particles of the nanodiamond (nanodiamond soot) obtained by the above method are preferably subjected to an acid treatment by which the oxides of metals (metal oxides) are dissolved and removed using a strong acid.

The strong acid for use in the acid treatment is preferably selected from mineral acids such as hydrochloric acid, hydrofluoric acid, sulfuric acid, nitric acid, and aqua regia. Each of them may be used alone or in combination.

The acid treatment is generally performed in water. The acid treatment may employ the strong acid (such as a mineral acid) in a concentration of typically 1 to 50 weight percent, preferably 3 to 30 weight percent, and more preferably 5 to 20 weight percent. The acid treatment may be performed for a time of typically 0.1 to 24 hours, preferably 0.2 to 10 hours, and more preferably 0.3 to 5 hours. The acid treatment may be performed at a temperature of typically 70°C to 150°C, preferably 90°C to 130°C, and more preferably 100°C to 125°C. The acid treatment may be performed under any pressure, such as under reduced pressure, at normal atmospheric pressure, or under pressure (under a load), but is preferably performed at normal atmospheric pressure. This is preferred typically in view of operability and facilities.

The nanodiamond soot further includes graphite, in addition to the metal components. To remove graphite, the nanodiamond soot (preferably, one obtained by subjecting the nanodiamond soot to the acid treatment) is preferably subjected to an oxidation treatment.

Non-limiting examples of an oxidizer for use in the oxidation treatment include concentrated nitric acid, fuming nitric acid, and fuming sulfuric acid; chromic acid, chromic anhydride, dichromic acid, permanganic acid, perchloric acid, and salts of these acids; and hydrogen peroxide. Each of them may be used alone or in combination. Among them, the oxidizer for use herein is preferably at least one selected from the group consisting of chromic acid, chromic anhydride, dichromic acid, permanganic acid, perchloric acid, salts of these acids, and hydrogen peroxide.

The oxidation treatment is generally performed in a solvent. The solvent is preferably water. The oxidizer may be used in the oxidation treatment in a concentration of typically 3 to 50 weight percent, and preferably 6 to 30 weight percent. The oxidizer may be used in an amount of typically 300 to 5000 parts by weight, preferably 500 to 3000 parts by weight, and more preferably 800 to 2000 parts by weight, per 100 parts by weight of the nanodiamond.

The oxidation treatment is preferably performed in the coexistence of a mineral acid in view of efficiency in graphite removal. Non-limiting examples of the mineral acid are as listed above. The mineral acid is preferably sulfuric acid. The mineral acid (such as sulfuric acid), when used in the oxidation treatment, may be present in a concentration of typically 5 to 80 weight percent, preferably 10 to 70 weight percent, and more preferably 20 to 60 weight percent.

The oxidation treatment may be performed for a treatment time of typically one hour or longer (e.g., 1 to 24 hours), preferably 2 hours or longer (e.g., 2 to 15 hours), and more preferably 3 hours or longer (e.g., 3 to 10 hours). The oxidation treatment may be performed at a treatment temperature of typically 100°C or higher (e.g., 100°C to 200°C), preferably 120°C or higher (e.g., 120°C to 180°C), more preferably 130°C or higher (e.g., 130°C to 160°C), and particularly preferably 135°C or higher (e.g., 135°C to 150°C). The oxidation treatment may be performed under any pressure, such as under reduced pressure, at normal atmospheric pressure, or under pressure (under a load), but is preferably performed at normal atmospheric pressure typically in terms of operability and facilities. The oxidation treatment, even when performed under pressure, is preferably performed at a pressure of 5 MPa or less. Accordingly, the pressure is preferably 0.1 to 5 MPa, more preferably 0.1 to 1 MPa, and furthermore preferably 0.1 to 0.5 MPa.

Nanodiamond particles obtained by subjecting the nanodiamond soot to the acid treatment are generally present as aggregates (agglutinates), in which a graphite layer is deposited on nanodiamond primary particles, and the graphite layer entangles two or more primary particles to form a so-called aggregate structure. The aggregate structure offers a firmer aggregation state as compared with a structure obtained by van der Waals cohesion. Nanodiamond particles, which are obtained by subjecting the nanodiamond soot as intact or after the acid treatment to the oxidation treatment, are generally present as aggregates in which nanodiamond primary particles undergo interparticle cohesion (van der Waals cohesion). In the description, the agglutinates and the aggregates formed by van der Waals cohesion are also collectively referred to as "nanodiamond aggregates". The nanodiamond aggregates have a D50 (median diameter) of generally 20 nm or more and usually from 100 nm to 10 µm.

After the oxidation treatment, washing with water (such as pure water or ion-exchanged water) is performed to yield nanodiamond particles (aggregates). The nanodiamond particles obtained in the above manner generally have surface acidic functional groups such as carboxy groups.

The surface acidic functional groups (such as carboxy groups) of particles of the nanodiamond (aggregates) after the oxidation treatment may be converted into salts (such as carboxylic acid salts) by treating particles of the nanodiamond after the oxidation treatment with an alkaline solution (such as a sodium hydroxide aqueous solution). The alkaline treatment may be performed at an alkali concentration of typically 1 to 50 weight percent, preferably 3 to 30 weight percent, and more preferably 5 to 20 weight percent. The alkaline treatment may be performed at a temperature of typically 70°C to 150°C, preferably 90°C to 130°C, and more preferably 100°C to 125°C, for a time of typically 0.1 to 24 hours, preferably 0.2 to 10 hours, and more preferably 0.3 to 5 hours. The nanodiamond particles can have free surface acidic functional groups again by treating the alkaline-treated nanodiamond particles with an acid such as hydrochloric acid. The acid treatment may be performed at room temperature or with heating.

Repeated water washing can remove electrolytes (such as NaCl), which are impurities, from the nanodiamond aggregates after the oxidation treatment, ones resulting from subjecting the nanodiamond aggregates after the oxidation treatment to the alkaline treatment, and ones resulting from further subjecting them to the acid treatment. Removal of electrolytes allows the nanodiamonds to disperse more satisfactorily (finely) and more stably.

The suspension of detonation nanodiamond aggregates in the present invention is a suspension of the nanodiamonds (aggregates) obtained in the above manner in a dispersion medium, where, in the nanodiamonds, at least part of surface acidic functional groups may form a salt, and the nanodiamonds may have undergone a classification treatment as needed. Non-limiting examples of the dispersion medium include water; and polar organic solvents exemplified by alcohols such as methanol, ethanol, and ethylene glycol, ketones such as acetone, and lactams or amides such as N-methylpyrrolidone; and mixtures of these solvents. Among them, dispersion media containing water (e.g., one containing 50 weight percent or more of water) are preferred, and water is particularly preferred.

The suspension B of nanodiamond aggregates, which meets the condition of having a pH of 8 to 10.5 and an electric conductivity of 300 µS/cm or less per weight percent of solids concentration, has a pH of 8 to 10.5. The suspension B of nanodiamond aggregates may have a pH of preferably 9 to 10.3, and more preferably 9.5 to 10.2. The suspension B of nanodiamond aggregates has an electric conductivity of 300 µS/cm or less per weight percent of the solids concentration (concentration of nanodiamonds). The suspension B of nanodiamond aggregates may have an electric conductivity of preferably 200 µS/cm or less, more preferably 150 µS/cm or less, and particularly preferably 100 µS/cm or less, per weight percent of the solids concentration. The lower the electric conductivity per weight percent of the solids concentration of the suspension B of nanodiamond aggregates is, the better. The lower limit of the electric conductivity may be about 5 µS/cm. The suspension of nanodiamond aggregates, when having a pH and an electric conductivity within the ranges and when subjected to deaggregation, can give a single-nano-sized nanodiamond dispersion which has excellent dispersion stability even when having a high concentration. A suspension of nanodiamond aggregates having a pH of from greater than 7 to less than 8, or having a pH of greater than 10.5, or a suspension of nanodiamond aggregates having an electric conductivity of greater than 300 µS/cm per weight percent of the solids concentration even when having a pH in the range of 8 to 10.5, may hardly give a single-nano-sized nanodiamond dispersion which has excellent dispersion stability even when having a high concentration.

The suspension B of nanodiamond aggregates, which meets the condition (2), can be produced typically by treating (preferably with heating) the suspension of nanodiamond aggregates, which has been treated typically with the strong acid, with an alkali such as a sodium hydroxide aqueous solution, subjecting the resulting suspension as intact in a basic state to water washing repeatedly to adjust the pH and the electric conductivity, and, as needed, adding, for example, ultrapure water to adjust to a predetermined concentration. The suspension can have a pH and an electric conductivity at desired levels by adjusting the number of water washing, and the amount of water for use in the washing.

The suspension of nanodiamond aggregates according to the present invention has a solids concentration (concentration of nanodiamonds) of preferably 4 weight percent or more (e.g., 4 to 20 weight percent), more preferably 5.5 weight percent or more (e.g., 5.5 to 15 weight percent), and furthermore preferably 7 weight percent or more (e.g., 7 to 12 weight percent). This is preferred from the viewpoint of giving a high-concentration single-nano-sized nanodiamond dispersion via a dispersing treatment.

### Single-Nano-Sized Nanodiamond Dispersion

The single-nano-sized nanodiamond dispersion according to the present invention (single-nano-sized dispersion I) is a dispersion obtained by subjecting the suspension of nanodiamond aggregates according to the present invention to a deaggregation treatment. This deaggregation treatment is hereinafter also referred to as a "dispersing treatment". The "single-nano-sized nanodiamond dispersion" refers to a dispersion in which diamond disperses as single-nano-sized particles. More specifically, the "single-nano-sized nanodiamond dispersion" refers to a dispersion in which particles of the diamond have a D50 of 1 to 9 nm. In the present invention, the term "deaggregation" is used in such a broad meaning as to also include deagglutination. The single-nano-sized dispersion I has a feature of having excellent dispersion stability even when having a high solids concentration. The single-nano-sized dispersion I may have a solids concentration of typically 4 weight percent or more (e.g., 4 to 15 weight percent).

The dispersing treatment may employ a disperser. Non-limiting examples of the disperser include high-shearing mixers, high-shear mixers, homomixers, ball mills, bead mills, high-pressure homogenizers, ultrasonic homogenizers, colloid mills, and wet jet mills. Among them, the dispersing treatment is preferably performed using a bead mill and/or an ultrasonic homogenizer in terms of efficiency.

The suspension of nanodiamond aggregates, when subjected to a dispersing treatment, is preferably subjected to the dispersing treatment while the suspension is adjusted to have a pH of 8 or more (e.g., 8 to 12), preferably 9 or more (e.g., 9 to 11), and more preferably 9.5 to 10.5. This is preferred for better dispersibility and better dispersion stability. After the dispersing treatment, a classification treatment may be performed as needed.

The present invention also provides a single-nano-sized dispersion II. The single-nano-sized dispersion II is a single-nano-sized nanodiamond dispersion which has a solids concentration (concentration of nanodiamonds) of 5.2 weight percent or more (e.g., 5.2 to 15 weight percent) and which has an electric conductivity of 300 µS/cm or less (e.g., 50 to 300 µS/cm) per weight percent of the solids concentration. The single-nano-sized nanodiamond dispersion as above can be readily produced by subjecting the suspension of nanodiamond aggregates according to the present invention to a dispersing treatment (dispersion process). The single-nano-sized nanodiamond dispersion (single-nano-sized dispersion II) has a feature of having excellent dispersion stability even when having a high solids concentration.

The single-nano-sized nanodiamond dispersions according to the present invention (the single-nano-sized dispersion I and the single-nano-sized dispersion II) may have a D50 of nanodiamond particles of typically 3.5 to 9 nm, and preferably 4 to 7 nm.

Exemplary dispersion media for use in the dispersing treatment include those exemplified as the dispersion medium for the suspension of detonation nanodiamond aggregates. Among them, dispersion media containing water (such as one containing 50 weight percent or more of water) are preferred, and water is particularly preferred.

The single-nano-sized nanodiamond dispersions according to the present invention (the single-nano-sized dispersion I and the single-nano-sized dispersion II) may each have a solids concentration of preferably 5.5 weight percent or more (e.g., 5.5 to 12 weight percent), and more preferably 6 weight percent or more (e.g., 6 to 10 weight percent). The dispersions may have an electric conductivity of preferably 250 µS/cm or less (e.g., 120 to 250 µS/cm), and more preferably 210 µS/cm or less (e.g., 160 to 210 µS/cm), per weight percent of the solids concentration.

The single-nano-sized nanodiamond dispersions according to the present invention (the single-nano-sized dispersion I and the single-nano-sized dispersion II) may each have a pH of preferably 8 or more (e.g., 8 to 12), more preferably 8.3 or more (e.g., 8.3 to 11), and furthermore preferably 8.6 or more (e.g., 8.6 to 10), from the point of dispersion stability.

In the single-nano-sized nanodiamond dispersions according to the present invention (the single-nano-sized dispersion I and the single-nano-Sized dispersion II), particles of the nanodiamond may have a zeta potential (at 25°C) of typically -30 mV or less (e.g., -70 mV to -30 mV), preferably -42 mV or less (e.g., -65 mV to -42 mV), and more preferably -45 mV or less (e.g., -60 mV to -45 mV), from the point of dispersion stability. As used herein, the "zeta potential" of nanodiamond particles in the single-nano-sized nanodiamond dispersions refers to a value measured on a single-nano-sized nanodiamond dispersion which has a nanodiamonds concentration of 0.2 weight percent and which is at 25°C. When a stock dispersion of a nanodiamond dispersion is to be diluted so as to prepare a single-nano-sized nanodiamond dispersion having a nanodiamonds concentration of 0.2 weight percent, ultrapure water is used as a diluent.

The single-nano-sized nanodiamond dispersions according to the present invention (the single-nano-sized dispersion I and the single-nano-sized dispersion II) are preferably derived from diamonds synthesized by an air-cooling detonation technique (derived from air-cooled detonation diamonds).

### Examples

The present invention will be illustrated in further detail with reference to several examples below. It should be noted, however, that the examples are by no means intended to limit the scope of the present invention. Percentages are by weight.

Properties of suspensions, dispersions, and nanodiamonds were measured by methods as follows.

### pH

Hydrogen ion concentrations (pHs) of the suspensions and dispersions were measured using pH METER D-51 (trade name) supplied by HORIBA, Ltd.

### Electric Conductivity

Electric conductivities of the suspensions and dispersions were measured using LAQUAtwin (trade name) supplied by HORIBA, Ltd.

### Solids Concentration

Solids contents of the suspensions and dispersions were each determined by accurately weighing 3 to 5 g of a sample fluid (suspension or dispersion), heating the same up to 100°C or higher to evaporate water, and accurately weighing the dried article.

### D50 (Median Diameter) and Zeta Potential

D50s of nanodiamond particles, and zeta potentials (at 25°C and at a concentration of 0.2 weight percent) of the nanodiamond particles in the dispersions were determined using Zetasizer Nano ZS (trade name) supplied by Spectris Co., Ltd. The D50s were determined by dynamic light scattering (noncontact backscatter technique), and the zeta potentials were determined by laser Doppler electrophoresis.

### Preparation Example 1 (Oxidation Treatment of Air-Cooled Detonation Nanodiamond Soot)

Air-cooled detonation nanodiamond soot (supplied by ALIT Inc., Czech) having a primary particle diameter of nanodiamonds of 4 to 6 nm was weighed (200 g) and combined with 2 L of 10% hydrochloric acid, followed by a heat treatment under reflux for one hour. After cooling, water washing via decantation was performed repeatedly until the pH of a precipitate mixture reached 2, followed by removal of supernatants as much as possible.

Next, the precipitate mixture was combined with 2 L of 60% sulfuric acid aqueous solution and 2 L of 50% chromic acid aqueous solution, followed by a heat treatment under reflux for 5 hours. After cooling, water washing via decantation was performed repeatedly until the supernatant became colorless, followed by removal of supernatants as much as possible. This oxidation treatment gave nanodiamond aggregates which had a D50 of 2 µm.

### Example 1 (Dispersion Pretreatment-1 of Air-Cooled Detonation Nanodiamonds)

The precipitate mixture obtained in Preparation Example 1 was combined with 1 L of 10% sodium hydroxide aqueous solution, followed by a heat treatment under reflux for one hour. After cooling, the supernatant was removed by decantation, 6 N hydrochloric acid was added to adjust the pH to 2.5, followed by water washing via centrifugal sedimentation. The final-centrifuged precipitates were combined with ultrapure water to be adjusted to have a solids concentration of 8%. The slurry in this state had an electric conductivity of 64 µS/cm and a pH of 4.3.

### Example 2 (Dispersion Pretreatment-2 of Air-Cooled Detonation Nanodiamonds)

The precipitate mixture obtained in Preparation Example 1 was combined with 1 L of 10% sodium hydroxide aqueous solution, followed by a heat treatment under reflux for one hour. After cooling, the treated mixture as intact in a basic state was washed with water repeatedly by centrifugal sedimentation until the pH reached 10. The final-centrifuged precipitates were combined with ultrapure water to be adjusted to have a solids concentration of 8%. The slurry in this state had an electric conductivity of 400 µS/cm and a pH of 10.3.

### Example 3 (Dispersion Pretreatment-3 of Air-Cooled Detonation Nanodiamonds)

The precipitate mixture obtained in Preparation Example 1 was combined with 1 L of 10% sodium hydroxide aqueous solution, followed by a heat treatment under reflux for one hour. After cooling, the supernatant was removed by decantation, and hydrochloric acid was added to adjust the pH to 2.5, followed by water washing using an ultrafilter membrane. The final concentrate was combined with ultrapure water to be adjusted to have a solids concentration of 8%. The slurry in this state had an electric conductivity of 50 µS/cm and a pH of 5.2.

### Example 4 (Dispersion Pretreatment-4 of Air-Cooled Detonation Nanodiamonds)

The precipitate mixture obtained in Preparation Example 1 was combined with 1 L of 10% sodium hydroxide aqueous solution, followed by a heat treatment under reflux for one hour. After cooling, the resulting mixture as intact in a basic state was washed with water repeatedly using an ultrafilter membrane until the pH reached 10. The final concentrate was combined with ultrapure water to be adjusted to have a solids concentration of 8%. The slurry in this state had an electric conductivity of 511 µS/cm and a pH of 9.8.

### Example 5 (Single-Nano-Size Dispersing-1 of Air-Cooled Detonation Nanodiamonds)

The slurries before dispersion obtained in Example 1 and Example 3 were each subjected to dispersing using an ultrasonic homogenizer, where the ultrasonic homogenizer used herein was UH-300, supplied by SMT Co., Ltd. Each of the slurries obtained in Example 1 and Example 3 was adjusted to have a pH of 10 using sodium hydroxide, in which a standard horn was immersed, and to which ultrasound was applied for 30 minutes. After the application, coarse particles were removed by a classification operation via centrifugal separation, and this gave air-cooled detonation nanodiamond dispersions. The dispersion obtained from Example 1 had a solids concentration of 6.4%, a D50 of nanodiamond particles of 8.7 nm, an electric conductivity of 1260 µS/cm, a pH of 8.67, and a zeta potential of nanodiamond particles (at 25°C and at a concentration of 0.2 weight percent) of -47 mV. The dispersion obtained from Example 3 had a solids concentration of 6.2%, a D50 of nanodiamond particles of 7.4 nm, an electric conductivity of 1230 µS/cm, a pH of 8.55, and a zeta potential of nanodiamond particles (at 25°C and at a concentration of 0.2 weight percent) of -48 mV.

### Example 6 (Single-Nano-Size Dispersing-2 of Air-Cooled Detonation Nanodiamonds)

Air-cooled detonation nanodiamond dispersions were obtained by an operation similar to that in Example 5, except for using the slurries before dispersion obtained in Example 2 and Example 4; and for not performing the pH adjustment. The dispersion obtained from Example 2 had a solids concentration of 6.6%, a D50 of nanodiamond particles of 6.8 nm, an electric conductivity of 1250 µS/cm, a pH of 9.04, and a zeta potential of nanodiamond particles (at 25°C and at a concentration of 0.2 weight percent) of -48 mV.

The dispersion obtained from Example 4 had a solids concentration of 6.4%, a D50 of nanodiamond particles of 6.4 nm, an electric conductivity of 1280 µS/cm, a pH of 9.12, and a zeta potential of nanodiamond particles (at 25°C and at a concentration of 0.2 weight percent) of -47 mV.

### Example 7 (Single-Nano-Size Dispersing-3 of Air-Cooled Detonation Nanodiamonds)

The slurries before dispersion obtained in Example 1 and Example 3 were subjected to dispersing using a bead mill, where the bead mill used herein was the ULTRA APEX MILL UAM-015 supplied by KOTOBUKI INDUSTRIES CO., LTD. After charging zirconia beads having a diameter of 0.03 mm, which are deaggregation media, into a milling chamber up to 60% of the chamber volume, 300 mL of each of the slurries obtained in Example 1 and Example 3, which had been adjusted to have a pH of 10, were circulated at a flow rate of 10 L/h, and subjected to deaggregation for 90 minutes at a set peripheral speed of 10 m/s. Mixtures after deaggregation were recovered, from which coarse particles were removed by a classification operation via centrifugal separation, and this gave air-cooled detonation nanodiamond dispersions. The dispersion obtained from Example 1 had a solids concentration of 7.4%, a D50 of nanodiamond particles of 5.4 nm, an electric conductivity of 1410 µS/cm, a pH of 9.14, and a zeta potential of nanodiamond particles (at 25°C and at a concentration of 0.2 weight percent) of -49 mV. The dispersion obtained from Example 3 had a solids concentration of 7.2%, a D50 of nanodiamond particles of 5.8 nm, an electric conductivity of 1380 µS/cm, a pH of 9.05, and a zeta potential of nanodiamond particles (at 25°C and at a concentration of 0.2 weight percent) of -48 mV.

### Example 8 (Single-Nano-Size Dispersing-4 of Air-Cooled Detonation Nanodiamonds)

The slurries before dispersion obtained in Example 2 and Example 4 were subjected to dispersing using a bead mill. An operation similar to that in Example 7 was performed, except for not performing the pH adjustment, and yielded air-cooled detonation nanodiamond dispersions. The dispersion obtained from Example 2 had a solids concentration of 7.3%, a D50 of nanodiamond particles of 5.2 nm, an electric conductivity of 1320 µS/cm, a pH of 8.78, and a zeta potential of nanodiamond particles (at 25°C and at a concentration of 0.2 weight percent) of -48 mV. The dispersion obtained from Example 3 had a solids concentration of 7.2%, a D50 of nanodiamond particles of 5.5 nm, an electric conductivity of 1350 µS/cm, a pH of 9.07, and a zeta potential of nanodiamond particles (at 25°C and at a concentration of 0.2 weight percent) of -48 mV.

### Comparative Example 1

The precipitate mixture obtained in Preparation Example 1 was combined with 1 L of 10% sodium hydroxide aqueous solution, followed by a heat treatment under reflux for one hour. After cooling, the supernatant was removed by decantation, the resulting article was adjusted to have a pH of 2.5 by the addition of hydrochloric acid, subjected to water washing via centrifugal sedimentation, and the washing was completed at the time when the resulting slurry had an electric conductivity of 800 µS/cm at a solids concentration of 8%. The obtained slurry was subjected to an operation similar to that in Example 5 and yielded a dispersion. The dispersion had a solids concentration of 1.2% and was found to have a D50 of nanodiamond particles of 22 nm as a result of particle diameter measurement. It was found that when a dispersing treatment was performed in a state where the slurry had a high electric conductivity, only part of nanodiamonds underwent dispersion (large amounts of coarse particles were present), and, in addition, the nanodiamonds did not disperse in a state of primary particles.

### Comparative Example 2

The precipitate mixture obtained in Preparation Example 1 was combined with 1 L of 10% sodium hydroxide aqueous solution, followed by a heat treatment under reflux for one hour. After cooling, the resulting mixture as intact in a basic state was subjected to water washing via centrifugal sedimentation until the pH reached 11. The final-centrifuged precipitates were combined with ultrapure water to be adjusted to have a solids concentration of 8%. The resulting slurry in this state had an electric conductivity of 2000 µS/cm. The obtained slurry was subjected to an operation similar to that in Example 5 and yielded a dispersion. The dispersion had a solids concentration of 2.2% and was found to have a D50 of nanodiamond particles of 25 nm as a result of particle diameter measurement. It was found that when a dispersing treatment was performed in a state where the slurry had a high electric conductivity, only part of nanodiamonds underwent dispersion (large amounts of coarse particles were present), and, in addition, the nanodiamonds did not disperse in a state of primary particles.

### Evaluation Test: Dispersion Stability

Dispersion stability of the dispersions obtained in the examples and comparative examples was evaluated in the following manner.

D50s of nanodiamond particles were measured one month later from the preparation of the dispersions. As a result, the dispersions according to the examples offered approximately no change and had D50s of nanodiamond particles approximately equivalent to the D50s of nanodiamond particles immediately after the preparation of the dispersions. In contrast, the dispersions according to the comparative examples underwent aggregation to form precipitates, from which it was apparent that particles in the dispersions did not disperse in a nanometer size.

### Industrial Applicability

The suspensions of nanodiamond aggregates according to the present invention can readily give single-nano-sized nanodiamond dispersions which have excellent dispersion stability (are highly stable) even when having a high concentration.

The single-nano-sized nanodiamond dispersions according to the present invention resist aggregation and have excellent dispersion stability even when having a high concentration.

## Claims

1. A suspension of nanodiamond aggregates, the suspension being a suspension of detonation nanodiamond aggregates,
the suspension having a pH of 8 to 10.5 and an electric conductivity of 300 µS/cm or less per weight percent of solids concentration of the suspension.

2. The suspension of nanodiamond aggregates, according to claim 1, wherein the suspension has a solids concentration of 4 weight percent or more.

3. The suspension of nanodiamond aggregates, according to one of claims 1 and 2, wherein the detonation nanodiamond aggregates are aggregates of air-cooled detonation nanodiamonds.

4. A single-nano-sized nanodiamond dispersion, obtained by subjecting the suspension of nanodiamond aggregates according to any one of claims 1 to 3 to deaggregation.

5. The single-nano-sized nanodiamond dispersion according to claim 4, wherein the dispersion has a solids concentration of 4 weight percent or more.

6. A method for producing a single-nano-sized nanodiamond dispersion, the method comprising the step of subjecting the suspension of nanodiamond aggregates according to any one of claims 1 to 3 to a deaggregation treatment.

7. The method according to claim 6 for producing a single-nano-sized nanodiamond dispersion, wherein the step comprises subjecting the suspension of nanodiamond aggregates to a deaggregation treatment while adjusting the suspension to have a pH of 8 or more.

8. The method according to one of claims 6 and 7 for producing a single-nano-sized nanodiamond dispersion, wherein the deaggregation treatment is performed using a bead mill or ultrasound.

9. A single-nano-sized nanodiamond dispersion having a solids concentration of 5.2 weight percent or more and having an electric conductivity of 300 µS/cm or less per weight percent of the solids concentration.

10. The single-nano-sized nanodiamond dispersion according to claim 9, wherein the dispersion has a solids concentration of 5.5 weight percent or more.

11. The single-nano-sized nanodiamond dispersion according to one of claims 9 and 10, wherein the dispersion has a pH of 8 or more.

12. The single-nano-sized nanodiamond dispersion according to any one of claims 9 to 11, wherein particles of the nanodiamond have a zeta potential (at 25°C) of -42 mV or less.

13. The single-nano-sized nanodiamond dispersion according to any one of claims 9 to 12, wherein the dispersion is derived from diamond synthesized by an air-cooling detonation technique.

## Patentansprüche

1. Suspension von Nanodiamant-Aggregaten, wobei es sich bei der Suspension um eine Suspension von Detonations-Nanodiamant-Aggregaten handelt,
wobei die Suspension einen pH-Wert von 8 bis 10,5 und eine elektrische Leitfähigkeit von 300 µS/cm oder weniger pro Gewichtsprozent der Feststoffkonzentration der Suspension aufweist.

2. Suspension von Nanodiamant-Aggregaten gemäß Anspruch 1, wobei die Suspension eine Feststoffkonzentration von 4 Gewichtsprozent oder mehr aufweist.

3. Suspension von Nanodiamant-Aggregaten gemäß einem der Ansprüche 1 und 2, wobei es sich bei den Detonations-Nanodiamant-Aggregaten um Aggregate von luftgekühlten Detonations-Nanodiamanten handelt.

4. Dispersion von Nanodiamanten einheitlicher Nanogröße, erhalten, indem die Suspension von Nanodiamant-Aggregaten gemäß einem der Ansprüche 1 bis 3 einer Deaggregation unterzogen wird.

5. Dispersion von Nanodiamanten einheitlicher Nanogröße gemäß Anspruch 4, wobei die Dispersion eine Feststoffkonzentration von 4 Gewichtsprozent oder mehr aufweist.

6. Verfahren zum Herstellen einer Dispersion von Nanodiamanten einheitlicher Nanogröße, wobei das Verfahren den Schritt umfasst, die Suspension von Nanodiamant-Aggregaten gemäß einem der Ansprüche 1 bis 3 einer Deaggregationsbehandlung zu unterziehen.

7. Verfahren gemäß Anspruch 6 zum Herstellen einer Dispersion von Nanodiamanten einheitlicher Nanogröße, wobei der Schritt umfasst, die Suspension von Nanodiamant-Aggregaten einer Deaggregationsbehandlung zu unterziehen, während die Suspension auf einen pH-Wert von 8 oder mehr eingestellt wird.

8. Verfahren gemäß einem der Ansprüche 6 und 7 zum Herstellen einer Dispersion von Nanodiamanten einheitlicher Nanogröße, wobei die Deaggregationsbehandlung unter Verwendung einer Perlmühle oder von Ultraschall durchgeführt wird.

9. Dispersion von Nanodiamanten einheitlicher Nanogröße mit einer Feststoffkonzentration von 5,2 Gewichtsprozent oder mehr und einer elektrischen Leitfähigkeit von 300 µS/cm oder weniger pro Gewichtsprozent der Feststoffkonzentration.

10. Dispersion von Nanodiamanten einheitlicher Nanogröße gemäß Anspruch 9, wobei die Dispersion eine Feststoffkonzentration von 5,5 Gewichtsprozent oder mehr aufweist.

11. Dispersion von Nanodiamanten einheitlicher Nanogröße gemäß einem der Ansprüche 9 und 10, wobei die Dispersion einen pH-Wert von 8 oder mehr aufweist.

12. Dispersion von Nanodiamanten einheitlicher Nanogröße gemäß einem der Ansprüche 9 bis 11, wobei Partikel des Nanodiamanten ein Zeta-Potential (bei 25 °C) von -42 mV oder weniger aufweisen.

13. Dispersion von Nanodiamanten einheitlicher Nanogröße gemäß einem der Ansprüche 9 bis 12, wobei die Dispersion von Diamanten abgeleitet ist, die durch eine Luftkühlungs-Detonationstechnik synthetisiert wurden.

## Revendications

1. Suspension d'agrégats de nanodiamants, la suspension étant une suspension d'agrégats de nanodiamants de détonation,
la suspension ayant un pH de 8 à 10,5 et une conductivité électrique égale ou inférieure à 300 µS/cm par pourcent en poids de concentration en solides de la suspension.

2. Suspension d'agrégats de nanodiamants selon la revendication 1, la suspension ayant une concentration en solides égale ou supérieure à 4 pourcent en poids.

3. Suspension d'agrégats de nanodiamants selon l'une des revendications 1 et 2, les agrégats de nanodiamants de détonation étant des agrégats de nanodiamants de détonation refroidis par air.

4. Dispersion de nanodiamants individuels de taille nanométrique, obtenue en soumettant la suspension d'agrégats de nanodiamants selon l'une quelconque des revendications 1 à 3 à une désagrégation.

5. Dispersion de nanodiamants individuels de taille nanométrique selon la revendication 4, la dispersion ayant une concentration en solides égale à 4 pourcent en poids ou supérieure.

6. Procédé de production d'une dispersion de nanodiamants individuels de taille nanométrique, le procédé comprenant l'étape consistant à soumettre la suspension d'agrégats de nanodiamants selon l'une quelconque des revendications 1 à 3 à un traitement de désagrégation.

7. Procédé selon la revendication 6 de production d'une dispersion de nanodiamants individuels de taille nanométrique, l'étape comprenant la soumission de la suspension d'agrégats de nanodiamants à un traitement de désagrégation tout en ajustant la suspension pour qu'elle ait un pH égal ou supérieur à 8.

8. Procédé selon l'une des revendications 6 et 7 de production d'une dispersion de nanodiamants individuels de taille nanométrique, dans lequel le traitement de désagrégation est effectué à l'aide d'un broyeur à billes ou d'ultrasons.

9. Dispersion de nanodiamants individuels de taille nanométrique ayant une concentration en solides égale ou supérieure à 5,2 pourcent en poids et ayant une conductivité électrique égale ou inférieure à 300 µS/cm par pourcent en poids de la concentration en solides.

10. Dispersion de nanodiamants individuels de taille nanométrique selon la revendication 9, la dispersion ayant une concentration en solides égale ou supérieure à 5,5 pourcent en poids.

11. Dispersion de nanodiamants individuels de taille nanométrique selon l'une des revendications 9 et 10, la dispersion ayant un pH égal ou supérieur à 8.

12. Dispersion de nanodiamants individuels de taille nanométrique selon l'une quelconque des revendications 9 à 11, des particules du nanodiamant ayant un potentiel zêta (à 25 °C) égal ou inférieur à -42 mV.

13. Dispersion de nanodiamants individuels de taille nanométrique selon l'une quelconque des revendications 9 à 12, la dispersion étant issue de diamant synthétisé par une technique de détonation à refroidissement par air.
